# EUROPEAN PATENT APPLICATION

(11) **EP 1 617 318 A2**
(43) Date of publication of application: **18.01.2006**
(21) Application number: 05254418.6
(22) Date of filing: 14.07.2005
(51) Int. Cl.: G06F 3/02, G06F 1/16

(54) **Apparatus and method for dual use of a numeric keypad**

(30) Priority: 14.07.2004 US 891987
(71) Applicant: Hewlett-Packard Development Company, L.P., Houston, Texas 77070 (US)
(72) Inventor: Homer, Steven S., Tombal, TX 77377 (US); Doczy, Paul J., Cypress, TX 77429 (US)
(74) Representative: Tollett, Ian

(57) **Abstract**

A numeric keypad (115) may be shared between first (105) and second (110) electronic devices, the second electronic device being integrated with the first electronic device or a keyboard (210) connected with the first electronic device. The second electronic device may be activated and the numeric keypad may be interfaced with the second electronic device, when a first input condition is present. The numeric keypad may be interfaced with the first electronic device, when a second input condition is present. The second electronic device may provide convenient functions such as a calculator, clock/calendar, alarm clock, timer, or a combination thereof independently of the power state of the first electronic device. The first electronic device may be any electronic device that uses a keyboard, such as a desktop computer or a portable computing device.

## Description

The present invention relates generally to an electronic keyboard, a portable computing device and to a method for sharing a numeric keypad between a first electronic device and a second electronic device. More specifically, it relates to techniques for using a numeric keypad in such devices.

A variety of computing devices such desktop computers, laptop computers, notebook computers, and personal digital assistants (PDAs) include an electronic keyboard and a display. Some devices also include a numeric keypad for entering numbers and performing simple calculations. The numeric keypad offers a convenient alternative to the top row of keys for inputting numbers and special symbols found on most typewriter-style keyboards. However, since the numeric keypad is operative only when the computing device to which it is connected or of which it is a part is powered up, the numeric keypad gets used only for the single purpose cited above.

It is thus apparent that there is a need in the art for an apparatus and method for dual use of a numeric keypad.

A method for sharing a numeric keypad between a first electronic device and a second electronic device is provided. The second electronic device may be activated and the numeric keypad may be interfaced with the second electronic device, when a first input condition is present. The numeric keypad may instead be interfaced with the first electronic device, when a second input condition is present. The second electronic device may be integrated with a keyboard connected with the first electronic device, or it may be integrated with the first electronic device itself. The second electronic device may provide one or more functions such as a calculator, clock/calendar, alarm clock, or timer even when the first electronic device is turned off. Apparatuses incorporating the method are also provided.

Other aspects and advantages of a number of preferred embodiments of the present invention will become apparent from the following detailed description, taken in conjunction with the accompanying drawings, in which:
Fig. 1 is a functional block diagram of an electronic system that includes a dual-use numeric keypad in accordance with an illustrative embodiment of the invention.
Fig. 2 is an illustration of a notebook computer that includes a dual-use numeric keypad in accordance with an illustrative embodiment of the invention.
Fig. 3 is a flowchart of a method for sharing a numeric keypad between a first electronic device and a second electronic device in accordance with an illustrative embodiment of the invention.

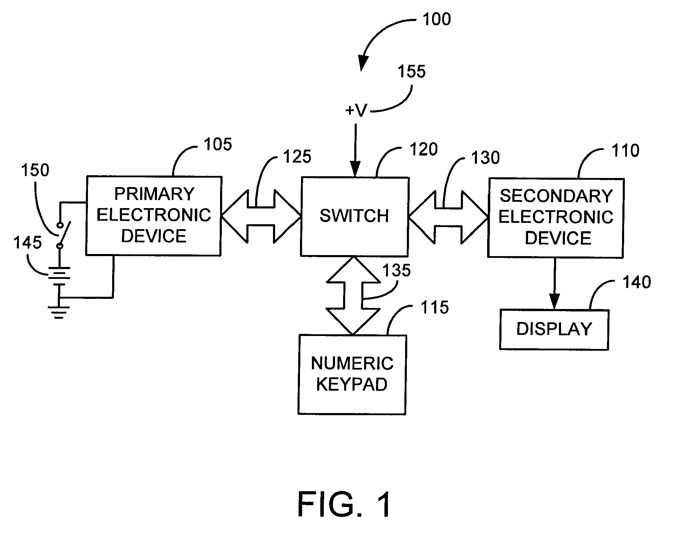

Fig. 1 is a functional block diagram of an electronic system 100 that includes a dual-use numeric keypad in accordance with an illustrative embodiment of the invention. In Fig. 1, primary electronic device 105 and secondary electronic device 110 are both electrically connected with numeric keypad 115 via switch 120. As those skilled in the art will recognize, switch 120 may conduct both data and power signals to primary electronic device 105 and secondary electronic device 110 via connections 125, 130, and 135. Principles for designing and implementing switch 120 are well known in the art. Secondary electronic device 110 may include a display 140. Primary electronic device 105 may have a system battery 145 that is controlled by on/off switch 150. In some embodiments, system battery 145 may power both primary electronic device 105 and secondary electronic device 110, in which case system battery 145 may be routed through switch 120 to secondary electronic device 110. In other embodiments, secondary electronic device 110 may be powered by an independent power source 155. For example, independent power source 155 may be a dedicated battery. In some embodiments, a solar cell may be used to power secondary electronic device 110 independently of primary electronic device 105.

Primary secondary device 105 may be any electronic device that uses a keyboard, such as a desktop PC or a portable computing device. Portable computing devices include, but are not limited to, laptop computers, notebook computers, personal digital assistants (PDAs), radiotelephones, (e.g., cellular phones), and digital imaging devices (e.g., digital cameras and digital camcorders). In general, secondary electronic device 110 may be any electronic device that performs at least one function. Examples include, but are not limited to, a calculator, a clock, a calendar, an alarm clock, a timer, or any combination thereof. Switch 120 may be configured to activate secondary device 110 and interface numeric keypad 115 with secondary electronic device 110, when switch 120 is in a first position. In some embodiments, this first position may be labeled "on." Switch 120 may be further configured to interface numeric keypad 115 with primary electronic device 105, when switch 120 is in a second position. In some embodiments, this second position may be labeled "off." The activation of secondary device 110, including associated display 140, may be performed independently of the power state of primary electronic device 105, making the functionality of secondary electronic device 110 available to a user at any time.

The principles illustrated in Fig. 1 may be applied, for example, to a notebook computer. Larger displays on recent notebook computers have resulted in larger areas of unused space on the keyboard deck. A portion of that unused space may be used to provide a secondary electronic device 110 that can share numeric keypad 115. Although a more detailed description is provided in the context of notebook computers, the principles of the invention are applicable to any primary electronic device 105 with the characteristics mentioned above, including other types of portable computing devices.

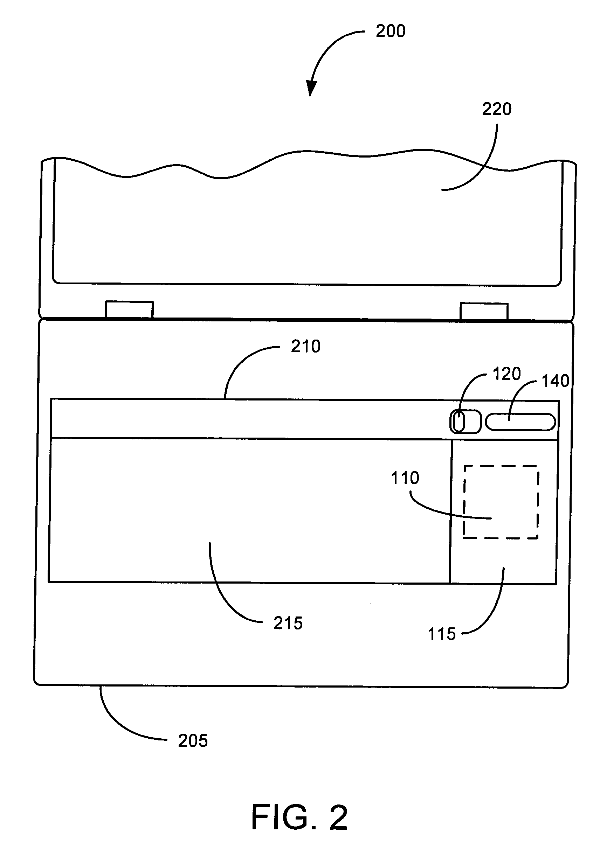

Fig. 2 is an illustration of a notebook computer 200 that includes a dual-use numeric keypad 115 in accordance with an illustrative embodiment of the invention. One or more component parts of notebook computer 200 are encased in enclosure 205. One of the hinged halves of notebook computer 200 may include a keyboard deck 210, which in turn may comprise a typewriter-style keyboard 215 (a set of alphanumeric keys arranged in a typewriter-style layout) and numeric keypad 115. In such an embodiment, notebook computer 200 is the primary electronic device 105. Secondary electronic device 110 may be concealed within enclosure 205. For example, secondary electronic device 110 may be implemented on a small printed-circuit board. Display 140 may be visible from the outside of enclosure 205 to display functions such as calculations, clock/calendar, alarm clock, timer, or a combination thereof. In Fig. 2, switch 120 selects between the interfacing of numeric keypad with notebook computer 200 or secondary electronic device 110. Switch 120 may additionally power on secondary electronic device 110 independently of the power state of notebook computer 200. Both notebook computer 200 and secondary electronic device 110 may be powered by system battery 145, or secondary electronic device 110 may have its own separate power source 155 (e.g., a solar cell or other dedicated battery). Notebook computer 200 typically also includes a display 220.

A user may use secondary electronic device 110 by simply setting switch 120 to the appropriate position to activate secondary electronic device 110 and interface numeric keypad 115 with secondary electronic device 110. In some embodiments, this position of switch 120 may be labeled "on" to signify that secondary electronic device 110 is turned on when switch 120 is in that position. When switch 120 is set to a different position, numeric keypad 115 may be interfaced with notebook computer 200. That is, numeric keypad 115 may act as a portion of keyboard deck 210 of notebook computer 200 in the usual fashion. In some embodiments, this different position of switch 120 may be labeled "off" to signify that secondary electronic device 110 is not active when switch 120 is in that position.

In some embodiments, the functionality of keyboard deck 210 in Fig. 2 may be embodied in an electronic keyboard that is separate from primary electronic device 105. For example, a desktop computer usually has an electronic keyboard that is separate from the central processing unit (CPU). Such an electronic keyboard may be electrically connected with the CPU via either a wired or wireless connection. In that context, the same principles of the invention discussed above apply, except that secondary electronic device 110 may be integrated with a separate electronic keyboard that is electrically connected with primary electronic device 105. Such an electronic keyboard may be very similar in function and layout to keyboard deck 210 of notebook computer 200. For example, the electronic keyboard may include a set of alphanumeric keys with a typewriter-style layout that is interfaced with primary electronic device 105 (similar to typewriter-style keyboard 215 in Fig. 2). Additionally, the separate electronic keyboard may include a numeric keypad 115 that, under control of switch 120, may interface with either primary electronic device 105 or secondary electronic device 110, as explained above.

Though it is possible to combine a secondary electronic device with an external numeric keypad that can be connected with a portable computing device or a desktop PC via, for example, a USB cable, the approach described above in which the secondary electronic device 110 is integrated with the portable computing device or a typewriter-style electronic keyboard offers distinct advantages. First, it saves space since the numeric keypad is part of the portable computing device or typewriter-style electronic keyboard. Secondly, it is more convenient since there is no need for the user to carry or connect a separate device to enjoy the functionality of numeric keypad 115 and secondary electronic device 110.

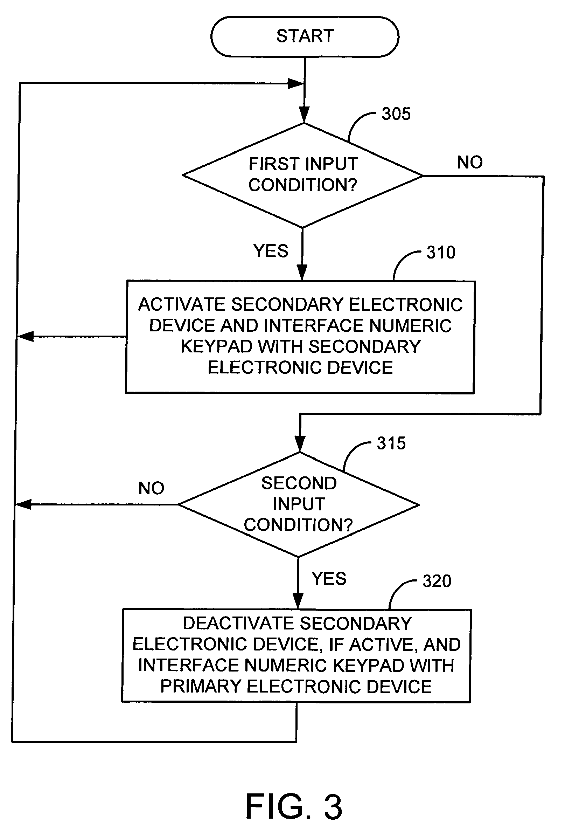

Fig. 3 is a flowchart of a method for sharing a numeric keypad 115 between a first electronic device 105 and a second electronic device 110 in accordance with an illustrative embodiment of the invention. At 305, a first input condition is tested. If the first input condition is present, secondary electronic device 110 may be activated and numeric keypad 115 may be interfaced with secondary electronic device 110 at 310. If the first input condition is not present, the method proceeds to 315, where a second input condition is tested. If the second input condition is present at 315, numeric keypad 115 is interfaced with primary electronic device 105 at 320. If secondary electronic device 110 had been activated prior to step 320, secondary electronic device 110 may also be deactivated (e.g., powered off) at 320. In some embodiments, first and second input conditions may comprise different positions of switch 120. For example, switch 120 may be a toggle switch labeled "on" and "off," as described above. Where switch 120 does comprise a toggle switch, the absence of the first condition at 305, of course, necessarily implies the presence of the second input condition at 315, and vice versa. In general, however, switch 120 may have more than two states, as those skilled in the art will recognize.

The foregoing description of the present invention has been presented for the purposes of illustration and description. It is not intended to be exhaustive or to limit the invention to the precise form disclosed, and other modifications and variations may be possible in light of the above teachings. The embodiments were chosen and described in order to best explain the principles of the invention and its practical application to thereby enable others skilled in the art to best utilize the invention in various embodiments and various modifications as are suited to the particular use contemplated. It is intended that the appended claims be construed to include other alternative embodiments of the invention except insofar as limited by the prior art.

## Claims

1. An electronic keyboard **210,** comprising:
a set of alphanumeric keys 215 that interface with a first electronic device **105;**
a numeric keypad **115;**
a second electronic device **110** integrated with the electronic keyboard **210,** the second electronic device **110** having a display **140;** and
a switch **120,** the switch **120** activating the second electronic device **110** and interfacing the numeric keypad **115** with the second electronic device **110,** when the switch **120** is in a first position, the switch **120** interfacing the numeric keypad **115** with the first electronic device **105,** when the switch **120** is in a second position.

2. The electronic keyboard **210** of claim 1, wherein the first electronic device **105** comprises a portable computing device with which the electronic keyboard **210** is integrated.

3. The electronic keyboard **210** of claim 1, wherein the first electronic device **105** comprises a desktop computer.

4. A portable computing device, comprising:
an enclosure **205;**
a secondary electronic device **110** embedded within the enclosure 205, the secondary electronic device **110** having a display **140** that is visible from outside the enclosure **205;**
a set of alphanumeric keys **215** that interface with the portable computing device;
a numeric keypad **115;** and
a switch **120,** the switch **120** activating the secondary electronic device **110** and interfacing the numeric keypad **115** with the secondary electronic device **110,** when the switch **120** is in a first position, the switch **120** interfacing the numeric keypad **115** with the portable computing device, when the switch **120** is in a second position.

5. A method for sharing a numeric keypad **115** between a first electronic device **105** and a second electronic device **110,** comprising:
activating the second electronic device **110** and interfacing the numeric keypad **115** with the second electronic device **110** in response to a first input condition; and
interfacing the numeric keypad **115** with the first electronic device **105** in response to a second input condition.

6. The method of claim 5, wherein the first input condition comprises a switch **120** being in a first position and the second input condition comprises the switch **120** being in a second position.
